# EUROPEAN PATENT APPLICATION

(11) **EP 1 111 561 A2**
(43) Date of publication of application: **27.06.2001**
(21) Application number: 00310463.5
(22) Date of filing: 24.11.2000
(51) Int. Cl.: G07F 19/00, G07F 7/08, G06F 17/60

(54) **Transaction system and method**

(30) Priority: 23.12.1999 GB 9930592
(71) Applicant: NOKIA MOBILE PHONES LTD., 02150 Espoo (FI)
(72) Inventor: Cofta, Piotr, 80-288 Gdansk (PL)
(74) Representative: Style, Kelda Camilla Karen

(57) **Abstract**

A system for performing a transaction which comprises a communications device, a first party and a second party. The communications device is arranged to communicate with the first party and the second party, said second party storing information relating to a user of the communication device, said communication device being arranged to forward at least some of the information from the second party to the first party to permit a transaction to occur.

## Description

### Field of the Invention

The present invention relates to a system for carrying out transactions and in particular, but not exclusively to a payment system. The present invention also relates to a method of carrying out transactions such as payment.

### Background of the Invention

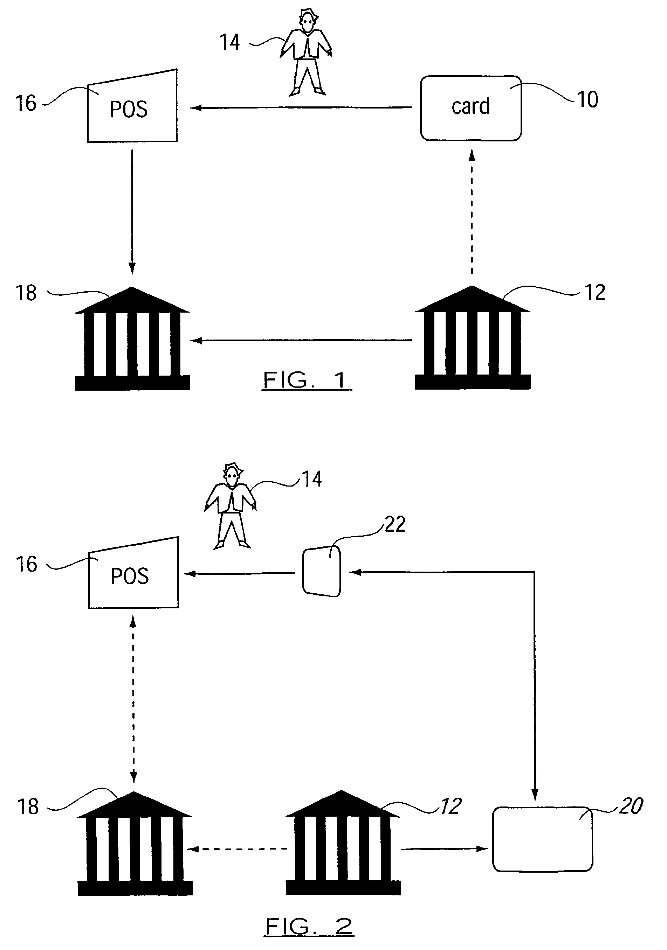

Reference is made to Figure 1 which schematically illustrates the process carried out by a card holder 14 to settle a transaction with a card 10. The card may be a debit card, a credit card or any other suitable card.

A card issuer 12 sends to the card holder 14 a card. The card 10 has a magnetic strip which contains information relating to the card issuer 12 and the card holder 14.

When the card holder wishes to settle a transaction in a shop or restaurant, the card 10 is presented by the card holder 14. At the point of sale 16, the point of sale device will read the information contained on the card 10. Usually, the point of sale 16 will call up a card acquirer 18 for approval of the transaction. If the card holder 14 has not exceeded his credit limit and the card has not been reported as stolen, the card acquirer 18 will usually approve the transaction. The card acquirer 18 is the entity which provides the merchant with the payment associated with the transaction. The card acquirer 18 also settles the transaction with the card issuer 12. The card issuer 12 is the entity which issues the cards to the card holders and settles the transactions with the card acquirers.

In the known system described in relation to Figure 1, the card holder 14 is required to present his card at a point of sale device 16. The point of sale device 16 is able to conduct an offline interaction with the card where it reads the magnetic strip of the card while conducting the online interaction with the card acquirer 18.

However, the arrangement shown in Figure 1 is susceptible to fraud. This is because the card 10 itself is particularly vulnerable. The point of sale device 16 is not able to access the issuer and therefore relies on the card to authenticate the card holder. However, the card can be easily stolen from the card holder 14 or copied and used without the consent of the card holder.

US-A-5943624 discloses a cellular telephone which includes electronics for implementing a cellular telephone function and a smart card function. The smart card can be accessed by an external reader. The information associated with the smart card function may be updated or modified via the cellular telephone structure. This smart card can be used to provide a credit card function. However, this arrangement has the disadvantage that periodically, the smart card may need to be replaced. Additionally, the mobile phone has to have the additional functionality in order to receive the smart card. Furthermore, the cellular telephone has the same problems as the card of Figure 1.

### Summary of the Invention

It is an aim of embodiments of the present invention to address the difficulties of the prior.

According to one aspect of the present invention there is provided a system for performing a transaction, comprising a communications device, a first party and a second party, said communications device being arranged to communicate with the first party and the second party, said second party storing information relating to a user of the communication device, said communication device being arranged to forward at least some of the information from the second party to the first party to permit a transaction to occur.

According to a second aspect of the present invention there is provided a system for performing a cashless transaction, comprising a communications device, a point of sale device and a first party, said communications device being arranged to communicate with the first party and the point of sale device, said first party storing information relating to a user of the communication device, said communication device being arranged to forward at least some of the information from the first party to the second party to permit a transaction to occur.

According to a third aspect of the present invention there is provided a system for performing a cashless transaction, comprising a communications device, a point of sale device and a financial institution, said communications device being arranged to communicate with the point of sale device and the financial institution, said financial institution storing a virtual card and communication device being arranged to forward at least some of the virtual card information from the financial institution to the point of sale to permit a transaction to occur.

### Brief Description of Drawings

For a better understanding of the present invention and as to how the same may be carried into effect, reference will now be made to the accompanying drawings in which:-
Figure 1 illustrates a traditional card payment process;
Figure 2 illustrates a card payment process in accordance with the present invention;
Figure 3 shows the arrangement of Figure 2 in more detail;
Figure 4 shows a wireless network which can be used with embodiments of the present invention;
Figure 5 shows a communication device embodying the present invention; and
Figure 6 shows the steps of a method embodying the present invention.

### Detailed description of Embodiments of the Invention

Reference is made to Figure 2 which shows an embodiment of the present invention. Those elements which are the same as in Figure 1 are indicated by the same reference number. The card issuer 12, in the embodiment shown in Figure 2, does not issue a physical card but instead creates a card entry 20 which is stored in a memory location in the card issuer 12. In the following description, the term "card entry" is used as it is analogous to a physical card. However, as will be discussed herein after, the card entry is in a data store.

In alternative embodiments of the present invention, the card entry may be stored at a separate location which is accessible by the card issuer 12. The information associated with the card entry 20 will be discussed later.

Instead of a card 20, the card holder 14 has a communication device 22. The card holder 14 uses the communication device 22 to communicate with the point of sale device 16 when the card holder 14 wishes to pay. When the card holder 14 is to pay, he presents his communication device 22 to the point of sale device 16. The communication device 22 also authenticates itself to the card issuer 12. Where the card entry is stored at a separate location to the card entry, the communication device will authenticate itself to the separate location. If the communication device is authenticated, the communication device 22 is allowed access to the card entry 20. The communication device 22 thus communicates with the point of sale device 16 and simulates the activity of the card 10 shown in Figure 1. In other words, the communication device 22 presents the required information to the point of sale device 16 in order to permit the point of sale device to proceed with the transaction.

In order to facilitate the card payment, details of the card entry 20 may also be provided to the card acquirer 18 by the point of sale device 18 or even the card issuer. However, this is not necessary and may be omitted in embodiments of the present invention.

Since the card issuer 12 is connected to the communication device 22 whenever the card holder 14 wishes to make a transaction, the card issuer 12 is able to maintain control over the card entry 20 throughout the life of that entry. This is contrast to physical cards where the card issuer sends the card to the card holder 14.

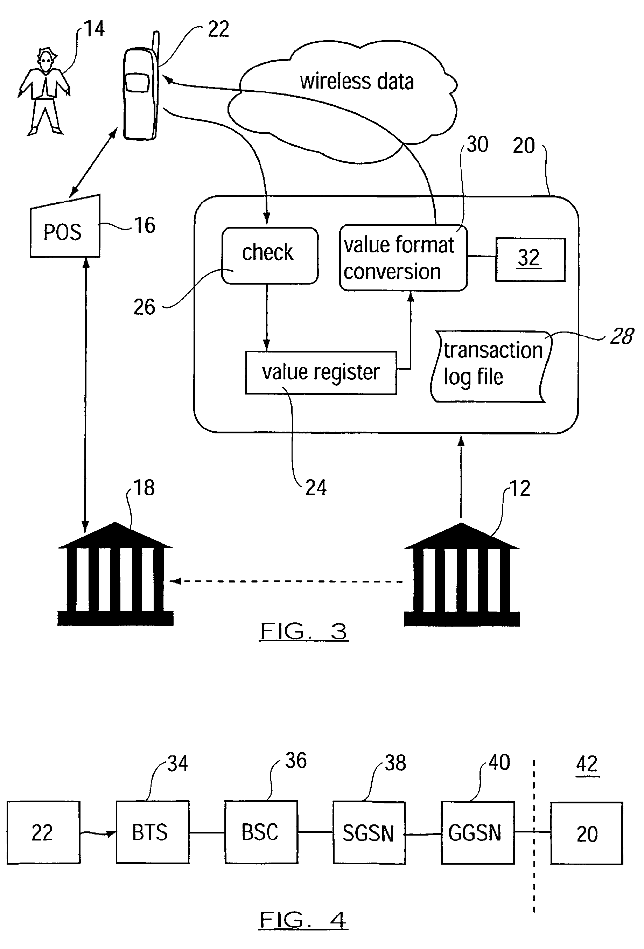

Reference will now be made to Figure 3 which shows in more detail how the embodiment shown in Figure 2 may be implemented. The communication device 22 may be a mobile telephone or may be a dedicated device which is arranged solely to communicate with the point of sale devices 16 and the card issuer 12. The device 22 may of course be any other suitable communication device which is able to communicate with point of sale devices and the card issuer 12.

As can be seen from Figure 3, each card entry for each user is provided with a number of components. The card entry 20 has a value register 24. The value register sets the maximum value that is permitted for the card. In the case of a credit card, this would set the maximum spending limit. The value register 24 may also or alternatively hold a value setting out the maximum permitted amount to be spent in a given time period, such as a day, week or month. Alternatively or additionally, the value register 24 may also store the current balance. If the card 20 is a credit card, then the value register 24 may store the amount which has been spent by the card holder 14 since he last made a payment to the card issuer. It is of course alternatively possible that the value register store the amount of outstanding credit, taking into account how much the card holder 14 has spent since he last settled with the card issuer. In this latter case, it may not be necessary to store the credit limit but instead to only store the remaining credit. The value register may in the case of debit card contain the balance of the card holder's account. The value register 24 may also store the maximum permitted amount for a single transaction.

A check processor 26 is provided. The check processor 26 is arranged to receive information from the communication device 22 when communication is established with the card entry. The communication device 22 is arranged to provide information concerning the transaction. This information may include the value of the transaction and optionally the type of purchase or transaction. The check processor 26 uses information stored in the value register to determine if the transaction can proceed. The check processor 26 will check that the purchase does not exceed the credit limit, in the case of the credit card or that there are available funds in the case of a debit card. The check processor 26 will also determine, if required, if the transaction exceeds the maximum permitted amount for a single transaction. The check processor will also use the information in the value register to determine if the transaction is one which is permitted or not. The check processor will also determine if the transaction does not cause any maximum spending for the predetermined period to be exceeded.

If the transaction is one which is permitted, then information included in the value register 24 may be updated to reflect the current transaction.

The card entry 20 also has a transaction log file. This records all the transactions of the user. The check processor 26 will add the transaction to the transaction log file if the transaction is approved. The log may additionally, in alternative embodiments of the invention store failed transactions. This information may allow any potentially fraudulent activity to be detected.

The card entry 20 optionally has a value conversion unit 30. The conversion unit 30 is arranged to send information relating to the values contained in the value register 24 to the point of sale device 16 via the communication device 22. The conversion device 30 is arranged to put the information into a format which can be readily understood by the point of sale devices 16. This means that existing point of sale devices 16 can be adapted to be used in embodiments of the present invention and do not necessarily have to be replaced.

The conversion unit 30 may also provide other information which might be required by the point of sale device 16 in a format which can be understood by the point of sale device 16. For this purpose, a further file 32 may be provided. This file 32 may include information identifying the card holder, account details of the card holder and the like.

The conversion unit 30 is arranged to convert values stored in the value register or the further file 32 into a format that is accepted by the point of sale device. For example, the value may be converted to a credit card number if the point of sale device is capable of handling credit card transactions. However, if the point of sale device can accept a "electronic purse" payment, then the value can be converted into the required format.

The communication device 22 is able to obtain access to the card entry 20 via a wireless connection therebetween. In preferred embodiments of the present invention, the communication device 22 may use an existing wireless data network. Wireless data networks are well known and an example of which is the general packet radio service (GPRS) which is a data standard which is used with a wireless cellular telecommunications network such as shown in Figure 4. In practice, the communication device 22 would be in communication with a base station 34 via a radio connection. The base station 34 in turn would be connected to a base station controller 36. The base station controller 36 would be connected to a SGSN (serving GPRS support node) 38. The SGSN 38 is connected to a GGSN (gateway GPRS support node) 40 which acts as a gateway. Connections can be obtained with the card entry 20, which can be regarded as being part of a different network, via the gateway 40. Alternative or additional elements may be provided in the communication path between the card entry and the communications device.

The communication device 22 is also arranged to communicate with the point of sale device 16. This connection can be by any suitable means. For example, the communication device 22 can be connected to the point of sale device by a wired connection. Alternatively, the communication device 22 can use the wireless data network in order to establish a connection with the point of sale device 16 if the point of sale device has a suitable receiver. The communication device 22 may call the point of sale device 16 connected to a wired or wireless telecommunications network such as the PSTN system via the wireless cellular telecommunications network.

Alternatively, the connection to the point of sale device can use any other radio frequency. For example, the "Bluetooth" proposed standard can be used. Bluetooth provides low power radio frequency signals, which may be in the giga hertz range. It should be appreciated that of course any other suitable frequency radio or otherwise can be used for communications between the point of sale device 16 and the communications device 22. The point of sale device 16 would incorporate the necessary receiver and transmitter in order to communicate with the communication device 22. It should be appreciated that in some embodiments of the invention, the point of sale device may not need to transmit to the communications device. The transmission circuitry can therefore be omitted from the point of sale device in this latter case.

As the communication device 22 is in contact with the card issuer 12 and the point of sale device 16, possibly at the same time but not necessarily, it is not necessary for the point of sale device 16 to contact the card acquirer 18 for approval. However, in some embodiments of the present invention, the point of sale device 16 may contact the card acquirer 18 for further approval.

In alternative embodiments of the invention infra-red may be used for the communications between the point of sale device and the communications device.

In embodiments of the present invention, the card or its equivalent effectively never leaves the card issuer 12 or is always accessible by the card issuer. The card entry 20 in preferred embodiments of the present invention contains at least the same information that is contained on an actual card and additionally can contain further information.

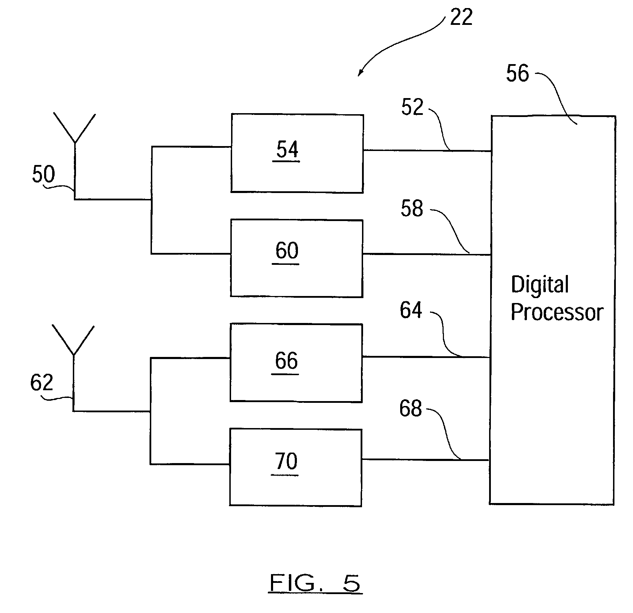

Reference is made to Figure 5 which shows a communication device embodying the present invention. The communication device 22 shown in Figure 5 is arranged to use the Bluetooth standard in order to communicate with the point of sale device 16. The communication device uses the GPRS standard in order to communicate with the card issuer. The device 22 has a first antenna 50 which is able to receive and transmit signals at the frequencies used by the GPRS standard. The output of the antenna 50 is connected to a receive branch 52. The receive branch 52 has a down converter arrangement 54 which converts the received signals to the base band frequency. The base band signals are output to a digital processor 56 which processes the signals in order to extract the required information. The receive branch 52 will receive information from the card entry 20.

The digital processor 56 is connected to a transmit branch 58 which is connected to the first antenna 50. The transmit branch has an up converter arrangement 60 which converts the base band signals output from the digital processor 56 to the frequency with which they can be transmitted by the first antenna 50. The digital processor 56 will prepare the signals which are to be transmitted to the card holder 20.

The communication device 52 has a second antenna 62. This antenna is arranged to receive and transmit signals in the Bluetooth frequency range. As with the first antenna, a receive path 64 is connected to the output of the second antenna. A down converter arrangement 66 is arranged to convert the received signals to the base band frequency and to output them to the digital processor for processing. Similarly, a transmit path 68 is connected between the output of the digital processor 56 and the second antenna 62. A up converter arrangement 70 is provided to convert the base band frequency to the Bluetooth frequency for transmission to the point of sale device 16.

The information from the point of sale device 16 may need to be converted into a format which can be readily understood by the card entry. This can be done in the digital processor 56 based on information received from the card entry 20. Alternatively, the data may be simply transmitted on to the card entry and the card entry 20 or a processor associated therewith makes the necessary conversion. Likewise, information to be transmitted to the point of sale device may be modified so as to be in a format which can be understood by that point of sale device 16. Information defining how the information for the point of sale device 16 is to be transmitted may be received by the communication device 22 from the card entry 20. This may be processed by the digital processor 56.

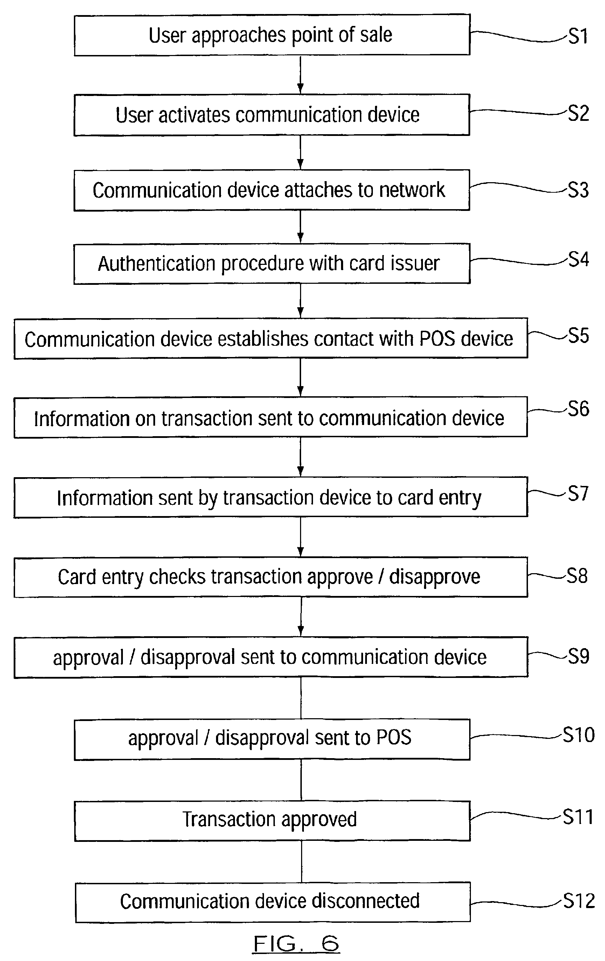

The process which will be carried out in order to complete a transaction will now be described with reference to Figure 6 which shows a method for making a credit or debit type of payment.

The user wishes to make a purchase and thus approaches the point of sale in step S1.

In step S2 the user activates the communication device 22 if it is not already activated. If the device 22 is not already connected to the wireless data network, the communication device 22 attaches to the network in step S3. The communication device 22 is arranged to establish a connection with the card issuer. This can be done by the standard call up procedure used in known telecommunications networks and will not be described in any further detail.

In step S4, an authentication procedure is established with the card issuer 12. The card issuer 12 may rely on the normal authentication procedure which is used to attach the communication device 22 to the wireless data network. In this conventional procedure, the communication device 22 has a secret key stored on the SIM card or the like. An authentication centre of the network will also know this secret. The authentication centre of the network generates a random number which is to be used in the encryption of the communications between the communication device and the network. The random number and secret key are used in a manner which verifies the identity of the communication device 22 without transmitting the key between the network and the communication device. Once the network has authenticated the communication device 22, communications between the communication device and the network are permitted, those communications being encrypted.

In one embodiment of the present invention, the card issuer 12 may also have a key which is separately provided to the communication device in a secure way. A similar authentication procedure can be followed in order to authenticate the device 22 to the card issuer 12. Additionally or alternatively, the user 14 may be required to enter a password into the communication device 22 which is forwarded to the card issuer 12 via the wireless communications network. The card entry 20 or the card issuer 12 is able to verify that the user 14 has entered the correct number. This provides a further check that the communication device 22 has not been stolen and is not being used fraudulently.

In step S5, the communication device 22 establishes a connection with the point of sale device 16. As described previously, this can be via a wired connection or a radio frequency connection or any other suitable method. Once a connection has been established between the point of sale device 16 and the communication device 22, information on the transaction is sent by the point of sale device 16 to the communication device 22. Typically, this will include the price associated with the transaction, information on the merchant and information about the type of transaction. This occurs in step S6.

In step S7, this information is forwarded by the communication device 22 to the card issuer 12. The communication device 22 may alter the format of the information to a form which can be understood by the card entry 20. Information enabling this change in the format of the information may be forwarded from the card issuer 12 to the communication device 22. Alternatively, any change in the format may take place at the card entry 20.

In step S8, the card entry 20 makes checks on the transaction. In particular, the card entry 20 checks if the transaction is approved or disapproved. The check processor 26 will check to see if the value of the transaction does not cause the value stored in the value register 24 to be exceeded. The card entry 20 also stores details of the transactions in the transaction log file. This information is used by the card issuer 12 to ensure that the merchant receives the payment for the transaction. The information in the value register 24 is updated and the communication device 22 sends via the wireless network confirmation as to whether or not the transaction can proceed. This occurs in step S9. The point of sale device 16 receives in step S10, information confirming that the transaction can proceed. In step S10, the communication device will also send to the point of sale device 16 any other required information. This information may include the identity of the card holder 14, the number of the card or account of the card holder 40 and any other required information which the point of sale device 16 requires. The information concerning the format of the data presented to the point of sale device 16 is forwarded from the card entry 20 to the device 22 in step S10.

It should be appreciated that information concerning the card holder may be sent to the point of sale device in an earlier step, for example step S5.

When the point of sale device 16 has received confirmation that the transaction has been approved and also the required information concerning the card holder, the transaction is completed. This occurs in step S11. The communication device 22 sends an indication to the card entry 20 indicating that the transaction has been completed. This is an optional step.

Finally, in step S12, the connection between the point of sale device 16 and the communication device and between the communication device and the card entry 20 are terminated.

It should be appreciated that in some embodiments of the present invention, the communication device 22 is not connected to the point of sale device 16 and the card issuer 12 at the same time.

Embodiments of the present invention may be used to support other types of facility such as an electronic purse or cash. This may mean that some or all of steps S6 to S11 are altered and/or not performed.

The card entry 20 can replace a conventional card or, in alternative embodiments of the present invention can be used to replace two or more cards of the user. It is of course possible that one card entry be created for each equivalent physical card.

When the device 22 is in contact with the point of sale device 16, the preferred method of payment that can be accepted by the point of sale device is generated, either automatically by the point of sale device or the communication device or with the assistance of the card holder or merchant. The preferred method of payment can be selected from those readily available at the card entry or from methods to which one of the methods of payment can be converted.

The point of sale device 16 may, in alternative embodiments of the present invention contact the card acquirer 18 in order to approve the card, as in the conventional system. However, this is not essential.

In alternative embodiments of the present invention, the card acquirer and card issuer may be provided by a single entity.

As will be appreciated, the card or its equivalent is at the card issuer 12 or even possibly at the card acquirer. This makes the system more secure than with the prior art.

It should be appreciated that embodiments of the present invention allow new payment methods and cards to be effectively introduced rapidly, without the need to send out cards. It is also possible for the existing point of sale devices to be adapted so as to work with embodiments of the present invention without the need to provide new point of sale devices.

Embodiments of the present invention are arranged to provide an equivalent function to cards which have a magnetic strip. Embodiments of the present invention are additionally or alternatively arranged to provide an equivalent function to smart cards, that is cards with an embedded electronic chip. With known smart cards, the point of sale device will interact with the embedded chip. In an equivalent manner, in embodiments of the invention, the point of sale device will interact with the information stored in the card entry by means of the communications device. Electronic cash or purses may be provided with embodiments of the invention or any other stored value service. In one preferred embodiment of the invention, a card entry may support more than one type of transaction. For example, the card entry may provide electronic cash and a debit or credit facility. If the point of sale device only supports one of these types of facility, the transaction can proceed with the supported facility. For example a debit transaction could be converted to a electronic cash transaction or the like.

Security is of course improved as the card entry 20 is under the control of the card issuer and thus it is more difficult for the card entry to be modified or copied.

Embodiments of the present invention allow the co-existence of several different payment systems to be implemented using the same communication device. The card entry may be shared amongst several different card issuers. Alternatively, the communication device may be arranged to access a card entry which is controlled by a number of different card issuers. Different card issuers may have different card entries which may be at the same or different locations.

Embodiments of the present invention avoid the need to provide replacement cards.

Additionally, as the communication device has to make contact with a card entry every time a transaction is to take place, this means that the account information for the card holder is always up to date. This means that the card holder is unable to exceed his limit.

In the preferred embodiment of the present invention, the check processor 26 is part of the card entry 20. However, in alternative embodiments of the present invention, this may be provided by the card issuer itself.

It should be appreciated that in some embodiments of the present invention, updates may be sent to the communication device 22 which may have some information related to the card entry stored on the device itself. In some embodiments of the present invention, the communication device 22 may not need to contact the card entry every time a transaction is made but may be contacted by the card issuer at regular intervals. This means that information relating to the card entry may be stored on the communication device 22. That information is updated every time a transaction is completed. Updated information may be sent to the card entry at the card issuer at regular intervals.

In one preferred embodiment of the present invention, the communication device may be authenticated by, for example, a finger print of the card holder 14. In this way, it is difficult for unauthorised use to be made of the facilities.

It should be appreciated that the communication device may be a mobile phone, a dedicated device for use in payment of transactions or can be any other suitable device, such as a personal organiser or the like.

The connection between the communication device 22 and the card issuer may take any suitable alternate form, such as a data call, a short message or paging service.

Embodiments of the present invention can be used to establish a credit card type function, a charge card type function, a debit card type function, a bonus point type function or an electronic purse type function.

In a further embodiment of the present invention, the connection between the communication device and the card issuer may take the form of a wired connection, for example via a conventional telephone connection or the like.

In the described embodiments of the present invention, the value register has been described as storing a plurality of different values. It should be appreciated that in alternative embodiments of the present invention, different registers may store different values. In alternative embodiments of the present invention the or each value register may be replaced by any other suitable data store.

In the described embodiments of the invention, information for the card entry has been forwarded to the point of sale. In an alternative embodiment, information from the point of sale is sent to the card entry. The card entry then confirms or refuses the transaction to ensure that the merchant or the like associated with the point of sale receives the appropriate payment.

In alternative embodiments of the invention, the communication device is arranged to forward transaction specific information from the point of sale to the card entry. This may be as well as or instead of the transmission of information from the card entry to the point of sale device.

Embodiments of the present invention are not limited to financial transactions. For example embodiments of the present invention may permit functions to occur. For example a first entity in the form of an access control device or lock is in communication with a second entity in the form of an access controller via the communications device. In this example, the function may be to allow the user access through a door or the like. Embodiments of the invention can be used wherever first and second entities are provided which communicate with each other via a communications device to permit a function to be achieved. The function can be a security function, an access function, a function related to the identity of the user or any other suitable function.

## Claims

**1.** A system for performing a transaction, comprising a communications device, a first party and a second party, said communications device being arranged to communicate with the first party and the second party, said second party storing information relating to a user of the communication device, said communication device being arranged to forward at least some of the information from the second party to the first party to permit a transaction to occur.

**2.** A system as claimed in claim 1 wherein said first party is a point of sale device.

**3.** A system as claimed in claim 1 or 2, wherein said first party is a payment device.

**4.** A system as claimed in any of claims 1 to 3, wherein said first party is provided at a goods or service provider.

**4.** A system as claimed in any preceding claim, wherein said second party is a financial service provider.

**5.** A system as claimed in claim 4, wherein said second party is a credit provider.

**6.** A system as claimed in claim 4 or 5, wherein said second party is a bonus points provider.

**7.** A system as claimed in any of claims 4 to 6, wherein said second party is a debit service provider.

**8.** A system as claimed in any of claims 4 to 7, wherein said second party is a charge card provider.

**9.** A system as claimed in any of claims 4 to 8, wherein said second party is a stored value service provider.

**10.** A system as claimed in any preceding claim, wherein said communications device is arranged to communicate with the first party using a first communication method and to communicate with the second party using a second communications method.

**11.** A system as claimed in any preceding claim, wherein at least one of the first and second parties communicates with the communication device using radio frequency signals.

**12.** A system as claimed in claim 11, wherein at least one of the first and second parties communicates with the communication device via a wireless data network.

**13.** A system as claimed in claim 12, wherein the wireless data network is a cellular telecommunications network.

**14.** A system as claimed in claim 13, wherein said wireless data network is a GPRS standard network.

**15.** A system as claimed in any preceding claim, wherein at least one of the first and second parties communicates with the communication device using signals in the giga Hertz frequency range.

**16.** A system as claimed in claim 15, wherein at least one of the first and second parties communicates with the communication device using the Bluetooth standard.

**17.** A system as claimed in any preceding claim, wherein at least one of the first and second parties communicates with the communication device using infra red frequency signals.

**18.** A system as claimed in any preceding claim, wherein at least one of the first and second parties communicates with the communication device using a wired connection.

**19.** A system as claimed in any one of the preceding claims, wherein said communications device is arranged to communicate with the first and second parties at the same time.

**20.** A system as claimed in any of claims 1 to 19, wherein the communications device is arranged to communicate with the first and second parties at different times.

**21.** A system as claimed in any one of the preceding claims wherein said communications device is a wireless communications device.

**22.** A system as claimed in claim 21, wherein said communications device is a mobile telephone.

**23.** A system as claimed in any preceding claim, wherein said information stored by said second party comprises at least one of the following:
the maximum value permitted for a single transaction;
the maximum spending level of the user;
the maximum amount that can be spent in a predetermined period of time;
the remaining amount of credit to the user; and
the current status of an associated account of the user.

**24.** A system as claimed in any preceding claim, wherein said information comprises information identifying the user.

**25.** A system as claimed in claim 24, wherein said information comprises the identity of the user and/or account details of the user.

**26.** A system as claimed in any preceding claims, wherein said second party is arranged to store information relation to the transaction.

**27.** A system as claimed in any preceding claim, wherein said first party is arranged to forward information relating to the transaction to said second party.

**28.** A system as claimed in claim 27, wherein said second party comprises for determining if the transaction is to be approved based on the information received from the first party and the information stored by said second party.

**29.** A system as claimed in claim 27 or 28, wherein said information received from the first party comprises one or more of the following type of information:
information relating to said identity of said first party; and
information relating to said transaction.

**30.** A system as claimed in any of claims 27 or 29, wherein said information stored in said second party is updated by the information relating to the transaction received from said first party.

**31.** A system as claimed in any preceding claim, wherein said second party comprises conversion means, said conversion means being arranged to convert information stored at said second party into a format understandable by said first party.

**32.** A system as claimed in any preceding claim, wherein said information is stored by said second party at a location accessible by said second party.

**33.** A system for performing a cashless transaction, comprising a communications device, a point of sale device and a first party, said communications device being arranged to communicate with the first party and the point of sale device, said first party storing information relating to a user of the communication device, said communication device being arranged to forward at least some of the information from the first party to the second party to permit a transaction to occur.

**34.** A system for performing a cashless transaction, comprising a communications device, a point of sale device and a financial institution, said communications device being arranged to communicate with the point of sale device and the financial institution, said financial institution storing a virtual card and communication device being arranged to forward at least some of the virtual card information from the financial institution to the point of sale to permit a transaction to occur.

**35.** A financial institution arranged to communicate with a point of sale device via a communications device in order to complete a cashless transaction, said communications device being presented by the user to the point of sale device, said financial institution arranged to store a virtual card entry for the user, said communications device permitting the financial institution to forward at least some of the information stored in said virtual card entry to the point of said device to permit a cashless transaction.

**36.** A method of carrying out a transaction, said method comprising the steps of:
storing information relating to a user at a second party;
transmitting at least some of said information to a communication device of a user;
transmitting at least some of said information from said communication device to a first party, and
permitting a transaction to be performed in dependence on the information received.

**37.** A method as claimed in claim 36, wherein said user is at the first party with the communication device.

**38.** A system for performing a transaction, comprising a communications device, a first party and a second party, said communications device being arranged to communicate with the first party and the second party, said second party storing information relating to a user of the communication device, said communication device being arranged to permit information relating to said transaction to be forwarded from the first party to said second party, said second party permitting the transaction to occur in dependence on the information stored at the second party and the information relating to said transaction.

**39.** A system for performing a transaction comprising a communications device, a first party and further comprising storage means for storing information relating to a user of the communications device, wherein said communication device is arranged to communicate with said first party and said storage means or transaction is permitted to proceed in dependence on information stored in said storage means, said storage means being at a location remote from said first party.

**40.** A communications device for use in a system comprising a first party and a second party, wherein said communication device is arranged to communicate with said first party and the second party to permit a transaction to occur, said communications device being arranged to receive information relating to a user of the device from the second party and to forward at least some of said information to the first party.

**41.** A communications device for use in a system comprising a first party and a second party, wherein said communication device is arranged to communicate with said first party and the second party to permit a transaction to occur, said communications device being arranged to forward information relating to said transaction from the first party to the second party.

**42.** A system for performing a function comprising a first entity, a second entity and a communications device, wherein said communications device is arranged to forward information from one entity to the other to allow one of said first and second entities to perform said function.
